# EUROPEAN PATENT APPLICATION

(11) **EP 2 672 564 A1**
(43) Date of publication of application: **11.12.2013**
(21) Application number: 12742136.0
(22) Date of filing: 23.01.2012
(51) Int. Cl.: H01M 10/50, H01M 2/10

(54) **ASSEMBLED BATTERY DEVICE**

(30) Priority: 31.01.2011 JP 2011018287
(71) Applicant: Nitto Denko Corporation, Osaka 567-8680 (JP)
(72) Inventor: TAGAWA, Kenichi, Ibaraki-shi Osaka 567-8680 (JP); TAKAYAMA, Yoshinari, Ibaraki-shi Osaka 567-8680 (JP)
(74) Representative: Intès, Didier Gérard André
(86) International application number: PCT/JP2012/000384
(87) International publication number: WO 2012/105177

(57) **Abstract**

An assembled battery device (1) of the present invention includes: a plurality of single cells (11) electrically connected to each other and arranged in a row; and a thermal emission tape disposed between a single cell (A) and a single cell (B) that are adjacent to each other among the plurality of single cells (11). The plurality of single cells (11) each include battery elements and a metallic container (12) housing the battery elements. The thermal emission tape is attached to at least a portion of a surface of an outer wall of the container of the single cell (A), and/or to at least a portion of a surface of an outer wall of the container of the single cell (B), the surface of the outer wall of the container of the single cell (A) facing the single cell (B), the surface of the outer wall of the container of the single cell (B) facing the single cell (A). The thermal emission tape has a total emissivity of 0.7 or more at a wavelength of 2 µm to 14 µm.

## Description

### TECHNICAL FIELD

The present invention relates to an assembled battery device formed of a plurality of single cells assembled together.

### BACKGROUND ART

There has been an increasing interest in hybrid automobiles and electric automobiles. In order to allow hybrid automobiles and electric automobiles to run efficiently, the development of batteries that have a high voltage, a high energy capacity, and a high energy density, is required. As such batteries, assembled battery devices that include a plurality of single cells connected to each other and assembled into a package are commonly used.

The efficiency and lifetime of assembled battery devices largely depend on temperature environment. In high-temperature environments, the efficiency and lifetime of assembled battery devices are reduced. Additionally, there is a problem in that unevenness in temperature among single cells constituting an assembled battery device adversely affects the output characteristics and lifetime of the assembled battery device.

In response, various techniques have been proposed in order to reduce temperature unevenness among single cells in an assembled battery device. For example, Patent Literature 1 discloses a technique in which a refrigerant flow path that allows a refrigerant to flow between single cells is provided, and the single cells are cooled by the refrigerant to reduce the temperature unevenness among the single cells.

### CITATION LIST

### Patent Literature

Patent Literature 1: JP H10 (1998)-3950 A

### SUMMARY OF INVENTION

### Technical Problem

However, a technique using a refrigerant, such as that disclosed in Patent Literature 1, requires providing a refrigerant flow path, and thus involves a relatively large-scale configuration. This results in a cost increase.

Thus, the present invention aims to provide an assembled battery device in which temperature unevenness among single cells is reduced (thermal homogeneity among single cells is achieved) without use of a large-scale configuration as proposed in Patent Literature 1.

### Solution to Problem

The present invention provides an assembled battery device including: a plurality of single cells electrically connected to each other and arranged in a row; and a thermal emission tape disposed between a single cell (A) and a single cell (B) that are adjacent to each other among the plurality of single cells. The plurality of single cells each include battery elements and a metallic container housing the battery elements. The thermal emission tape has a total emissivity of 0.7 or more at a wavelength of 2 µm to 14 µm, and is attached to at least a portion of a surface of an outer wall of the container of the single cell (A), and/or to at least a portion of a surface of an outer wall of the container of the single cell (B), the surface of the outer wall of the container of the single cell (A) facing the single cell (B), the surface of the outer wall of the container of the single cell (B) facing the single cell (A).

### Advantageous Effects of Invention

In the assembled battery device of the present invention, a thermal emission tape having a high level of thermal emission properties is disposed between at least two adjacent single cells. When the adjacent single cells are referred to as a single cell (A) and a single cell (B), the thermal emission tape is attached to at least a portion of a surface of an outer wall of the container of the single cell (A), and/or to at least a portion of a surface of an outer wall of the container of the single cell (B), the surface of the outer wall of the container of the single cell (A) facing the single cell (B), the surface of the outer wall of the container of the single cell (B) facing the single cell (A). That is, the thermal emission tape is attached to at least one of the surface of the single cell (A) and the surface of the single cell (B), the surfaces facing each other. Therefore, in the case where, for example, there is a temperature difference between the single cell (A) and the single cell (B), the thermal emission tape disposed between the single cells (A) and (B) allow heat to be efficiently transferred by radiant heat transfer from the container of the higher-temperature single cell to the container of the lower-temperature single cell. In addition, since the containers of the single cells are made of metal, the heat received by either container can be efficiently transmitted throughout the container by conductive heat transfer. In consequence, the temperature unevenness among the single cells is reduced in the assembled battery device of the present invention. Furthermore, this effect can be obtained by a simple configuration in which the thermal emission tape is attached to the outer wall(s) of the container(s) of the single cell(s).

### BRIEF DESCRIPTION OF DRAWINGS

FIG. 1 is a perspective view showing an example of an assembled battery device of an embodiment of the present invention.
FIG. 2 is a cross-sectional view showing an example of two adjacent single cells among a plurality of single cells included in an assembled battery device of an embodiment of the present invention, and an example of thermal emission tapes disposed between the two adjacent single cells.
FIG. 3 is a schematic diagram of an evaluation apparatus used in Example 1.

### DESCRIPTION OF EMBODIMENTS

Hereinafter, embodiments of the present invention will be described with reference to the drawings. It should be noted that the present invention is not limited by the following description.

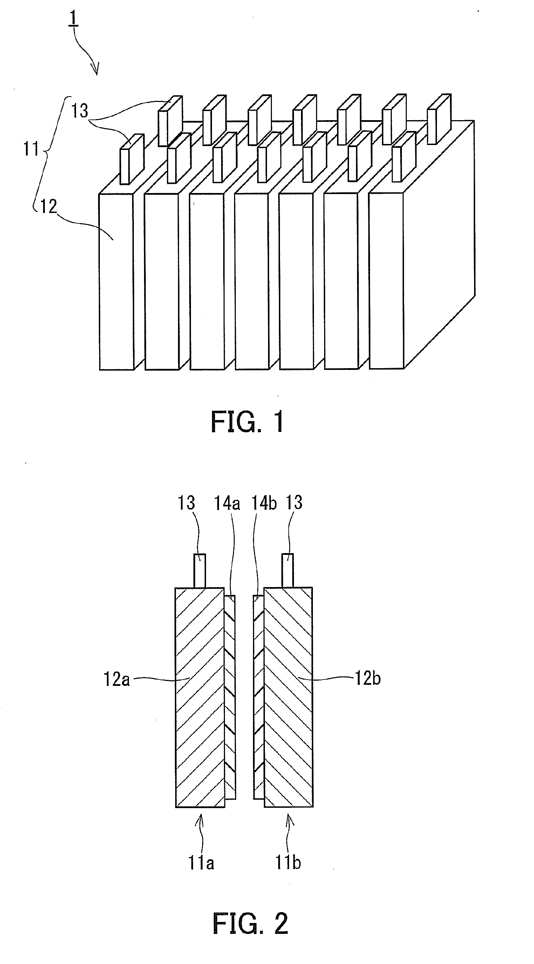

FIG. 1 shows an example of an assembled battery device of the present embodiment. As shown in FIG. 1, the assembled battery device 1 of the present embodiment includes a plurality of single cells 11 electrically connected to each other and arranged in a row.

The single cell 11 includes battery elements (not shown) such as an electrode plate, and a container 12 housing the battery elements. The container 12 is made of metal. For example, a container made of aluminum which has high thermal conductivity is suitably used as the container 12.

In the present embodiment, a description is given of an example in which the single cell 11 is a single lithium battery (lithium primary cell or lithium-ion secondary cell) having a flat, rectangular shape. A pair of electrodes 13 (positive electrode and negative electrode) is provided so as to project from one surface (top surface in the drawings) of the six surfaces of the container 12 of the single cell 11. When the plurality of single cells 11 are arranged in a row, the single cells are generally arranged in such a manner that the surfaces having the electrodes 13 face in the same direction as shown in FIG. 1.

Examples of the battery elements included in the single cell 11 include an electrode plate, a separator, and an electrolyte solution. The battery elements used herein are the same as those used in common lithium batteries.

Thermal emission tapes are disposed between the single cells 11 adjacent to each other. For the purpose of describing the arrangement of the thermal emission tapes, two adjacent single cells 11a and 11b (single cell (A) and single cell (B)) arbitrarily selected from among the plurality of single cells 11 are shown in FIG. 2.

In the present embodiment, a thermal emission tape 14a is attached to at least a portion of a surface of an outer wall of a container 12a of the single cell 11a, the surface facing the single cell 11b. In addition, a thermal emission tape 14b is attached to at least a portion of a surface of an outer wall of a container 12b of the single cell 11b, the surface facing the single cell 11a. The thermal emission tapes 14a and 14b have a high level of thermal emission properties, and have a total emissivity of 0.7 or more at a wavelength of 2 µm to 14 µm.

For example, when there is a temperature difference between the single cell 11a and the single cell 11b, the thermal emission tapes 14a and 14b disposed between the single cells 11a and 11b allow heat to be efficiently emitted from the container of the higher-temperature single cell, and then to be efficiently absorbed into the container of the lower-temperature single cell. Thus, in the assembled battery device 1, the thermal emission tapes 14a and 14b allow heat transmission/reception between the single cells 11 to take place efficiently by radiant heat transfer. In addition, since the containers 12a and 12b of the single cells are made of metal, heat received by either container can efficiently be transmitted throughout the container by conductive heat transfer, and can further be transferred to the container of another adjacent single cell on the opposite side. Consequently, the temperature unevenness among the single cells 11 is reduced.

The size and shape of the thermal emission tapes 14a and 14b are not particularly limited. However, the thermal emission tapes 14a and 14b preferably have a large area so as to further enhance the efficiency of heat transfer between the single cells 11 taking place by radiant heat transfer. For example, the thermal emission tape 14a may have the same shape and size as the surface of the outer wall of the container 12a of the single cell 11a, the surface facing the single cell 11b. Similarly, the thermal emission tape 14b may have the same shape and size as the surface of the outer wall of the container 12b of the single cell 11b, the surface facing the single cell 11a.

The thermal emission tapes 14a and 14b each include a substrate having thermal emission properties, and an adhesive layer formed on the substrate. The material of the substrate only needs to have thermal emission properties that allow the thermal emission tapes 14a and 14b to have desired thermal emission properties, and the material is not particularly limited. For example, general-purpose resins such as polyethylene (PE) and polyethylene terephthalate (PET), and heat resistant resins such as polytetrafluoroethylene (PTFE) and polyimide (PI), can be used as the material of the substrate. The substrate may contain various fillers for the purpose of, for example, improvement in infrared absorption/radiation characteristics and/or improvement in heat conductivity. In order to maintain the insulating properties, the substrate can contain, as a filler, one or more of silica, alumina, magnesia, titania, zirconia, aluminum nitride, boron nitride, and the like. A fiber-reinforced plastic such as a glass cloth may additionally be used as a filler. Furthermore, in the case where electrical conductivity needs to be provided, the substrate may contain one or more of carbon, carbon fiber, metal filler, and the like. The thickness of the substrate is not particularly limited, and is preferably 5 µm to 500 µm, and more preferably 10 µm to 150 µm. When the thickness is 5 µm or more, infrared ray is sufficiently absorbed in the substrate, and thus a high level of thermal emission properties can easily be obtained. The thickness is preferably 500 µm or less because when the thickness is 500 µm or less, it is possible to prevent conformity to irregular surfaces from being reduced due to the rigidity of the substrate itself.

Commonly-known acrylic adhesives or silicone adhesives can be used for the adhesive layers of the thermal emission tapes 14a and 14b. Acrylic adhesives are suitable for use at relatively low temperatures. Silicone adhesives are excellent in cold resistance and heat resistance, and thus are more suitable for use in a low-temperature range and a high-temperature range than acrylic adhesives.

In the present embodiment, the thermal emission tapes are attached to both the container 12a of the single cell 11a and the container 12b of the single cell 11b. Such a configuration, in which thermal emission tapes are attached to the containers of both of the single cells adjacent to each other, is preferable because the effect of thermally homogenizing the single cells 11 by utilizing radiant heat transfer can be enhanced. However, the assembled battery device of the present invention is not limited to this configuration. Even in the case of a configuration in which a thermal emission tape is attached only to the container 12a of the single cell 11a or the container 12b of the single cell 11b, the effect of reducing the temperature unevenness among the single cells 11 can be sufficiently obtained.

In the present embodiment, the configuration in which thermal emission tapes are disposed between all pairs of single cells adjacent to each other has been described. That is, in the assembled battery device of the present embodiment, any two adjacent single cells among the plurality of single cells constituting the assembled battery device correspond to the single cell (A) and the single cell (B). Such a configuration is preferable because the temperature unevenness among the single cells can be reduced to a greater extent. However, the assembled battery device of the present invention is not limited to this configuration. It is sufficient for the assembled battery device of the present invention to have a configuration in which a thermal emission tape is provided between at least one pair of single cells, i.e., a configuration in which at least two adjacent single cells among a plurality of single cells correspond to the single cell (A) and the single cell (B). Even with this configuration, the effect of reducing the temperature unevenness among the single cells can be obtained.

### EXAMPLES

Next, the assembled battery device of the present invention will be specifically described with reference to Examples. It should be noted that the present invention is not limited in any respect by Examples described below.

### (Example 1)

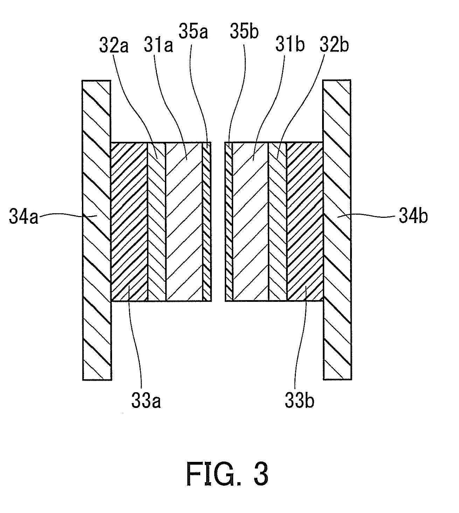

An evaluation apparatus as shown in FIG. 3 was fabricated, and the thermally-homogenizing effect of thermal emission tapes on single cells was evaluated. A sample was prepared which included an aluminum plate 31a (100 mm long × 100 mm wide × 15 mm thick), a heater 32a of 4 mm thickness, and a heat insulator 33a of 10 mm thickness that were layered in this order. Furthermore, another sample was prepared which included an aluminum plate 31b (100 mm long × 100 mm wide × 15 mm thick), a heater 32b of 4 mm thickness, and a heat insulator 33b of 10 mm thickness that were layered in this order. These two samples were held by supporting members 34a and 34b, respectively, in such a manner that the aluminum plate 31a and the aluminum plate 31b faced each other across a gap of 1 mm. Two pieces of NITOFLON (registered trademark) No. 903SC (manufactured by NITTO DENKO CORPORATION, having a thickness of 0.11 mm, and having a total emissivity of 0.95 at a wavelength of 2 µm to 14 µm) having dimensions of 100 mm × 100 mm were attached as thermal emission tapes 35a and 35b to the surfaces of the aluminum plates 31a and 31b, respectively. The temperatures of the aluminum plate 31a and the aluminum plate 31b in a stationary state were measured under the conditions that the output power of the heater 32a was 6 W, and the output power of the heater 32b was 0 W. The temperature of the aluminum plate 31a was 50.4°C. The temperature of the aluminum plate 31b was 44.5°C. The temperature difference between the aluminum plate 31a and the aluminum plate 31b was 5.9°C.

### (Example 2)

An evaluation apparatus as shown in FIG. 3 was fabricated in the same manner as in Example 1, except that two pieces of NITOFLON (registered trademark) No. 903UL (manufactured by NITTO DENKO CORPORATION, having a thickness of 0.08 mm, and having a total emissivity 0.85 at a wavelength of 2 µm to 14 µm) having dimensions of 100 mm × 100 mm were used as the thermal emission tapes 35a and 35b. The thermally-homogenizing effect of the thermal emission tapes on single cells was evaluated using this evaluation apparatus in the same manner as in Example 1. The temperature of the aluminum plate 31a was 50.5°C. The temperature of the aluminum plate 31b was 46.0°C. The temperature difference between the aluminum plate 31a and the aluminum plate 31b was 4.5°C.

### (Example 3)

Substrates having a total thickness of 0.42 mm and having a total emissivity of 0.92 at a wavelength of 2 µm to 14 µm were each prepared by applying a black coating material to a surface of DIAFOIL (registered trademark) B100C38 (manufactured by Mitsubishi Plastics, Inc. and having a thickness of 0.38 mm) having dimensions of 100 mm × 100 mm. Thermal emission tapes were fabricated by attaching double-sided adhesive tapes No. 5919 (manufactured by NITTO DENKO CORPORATION and having a thickness of 0.05 mm) as adhesive layers to the substrates. An evaluation apparatus as shown in FIG. 3 was fabricated in the same manner as in Example 1, except that the obtained thermal emission tapes were used as the thermal emission tapes 35a and 35b. The thermally-homogenizing effect of the thermal emission tapes on single cells was evaluated using this evaluation apparatus in the same manner as in Example 1. The temperature of the aluminum plate 31a was 50.3°C. The temperature of the aluminum plate 31b was 44.5°C. The temperature difference between the aluminum plate 31a and the aluminum plate 31b was 5.8°C.

### (Comparative Example 1)

An evaluation apparatus as shown in FIG. 3 was fabricated in the same manner as in Example 1, except that the thermal emission tapes 35a and 35b were not provided. The temperature difference between single cells in a configuration including no thermal emission tape was measured using this evaluation apparatus in the same manner as in Example 1. The total emissivity of each of the aluminum plates 31a and 31b was 0.03 at a wavelength of 2 µm to 14 µm. The temperature of the aluminum plate 31a was 53.9°C. The temperature of the aluminum plate 31b was 46.7°C. The temperature difference between the aluminum plate 31a and the aluminum plate 31b was 7.2°C.

The total emissivity at a wavelength of 2 µm to 14 µm of each of the thermal emission tapes used in Examples 1 to 3 is a value obtained by measuring the reflectance and the transmittance spectrum of the non-adhesive side of each thermal emission tape using Fourier transform infrared spectroscopy (FT-IR), and then by carrying out calculation. The conditions for the measurement were as follows.
Measurement apparatus: IFS-66v/S (FT-IR spectrometer manufactured by Bruker Corporation, evacuated optical system)
Light source: Globar (SiC)
Detector: MCT (HgCdTe)
Beam splitter: Ge/KBr
Resolution: 4 cm⁻¹
Total number of scans: 512 scans
Zero filling: Twice
Apodization: Triangle
Measurement range: 5000 cm⁻¹ to 715 cm⁻¹ (2 µm to 14 µm)
Measurement temperature: 25°C
Auxiliary equipment: Integrating sphere for measurement of transmittance and reflectance

The temperature difference between the aluminum plates 31a and 31b in Examples 1 to 3 in which the thermal emission tapes were provided was smaller than in Comparative Example 1 in which no thermal emission tape was provided. From this result, it was confirmed that a simple configuration in which thermal emission tapes are attached to containers of single cells allows heat transmission/reception between adjacent single cells to take place efficiently by radiant heat transfer, and can reduce the temperature difference between the single cells.

### INDUSTRIAL APPLICABILITY

In spite of its simple configuration, the assembled battery device of the present invention allows for a high degree of thermal homogeneity among the single cells, and thus can be expected to have good output characteristics and long lifetime. Accordingly, the assembled battery device of the present invention is applicable to various uses, and can be suitably used in particular for power-supply devices of electric automobiles.

## Claims

1. An assembled battery device comprising:
a plurality of single cells electrically connected to each other and arranged in a row; and
a thermal emission tape disposed between a single cell (A) and a single cell (B) that are adjacent to each other among the plurality of single cells, wherein
the plurality of single cells each comprise battery elements and a metallic container housing the battery elements, and
the thermal emission tape has a total emissivity of 0.7 or more at a wavelength of 2 µm to 14 µm, and is attached to at least a portion of a surface of an outer wall of the container of the single cell (A), and/or to at least a portion of a surface of an outer wall of the container of the single cell (B), the surface of the outer wall of the container of the single cell (A) facing the single cell (B), the surface of the outer wall of the container of the single cell (B) facing the single cell (A).

2. The assembled battery device according to claim 1, wherein the thermal emission tape is disposed between all pairs of the single cells adjacent to each other.

3. The assembled battery device according to claim 1, wherein
the thermal emission tape comprises a substrate having thermal emission properties, and an adhesive layer formed on the substrate, and
the adhesive layer is formed of an acrylic adhesive or a silicone adhesive.

4. The assembled battery device according to claim 1, wherein the single cells are single lithium cells.
